(19) Europäisches Patentamt
European Patent Office
Office européen des brevets

(11) **EP 4 099 047 B1**

(12) **EUROPEAN PATENT SPECIFICATION**

(45) Date of publication and mention
of the grant of the patent:
**10.01.2024 Bulletin 2024/02**

(21) Application number: **21177177.9**

(22) Date of filing: **01.06.2021**

(51) International Patent Classification (IPC):
*G01S 7/41* *(2006.01)*     *G01S 7/35* *(2006.01)*
*G01S 13/34* *(2006.01)*     *G01S 13/58* *(2006.01)*

(52) Cooperative Patent Classification (CPC):
**G01S 7/415; G01S 7/354; G01S 13/343;
G01S 13/584**

(54) **PRE-PROCESSING OF RADAR MEASUREMENT DATA FOR OBJECT DETECTION**

VORVERARBEITUNG VON RADARMESSDATEN ZUR OBJEKTDETEKTION

PRÉTRAITEMENT DE DONNÉES DE MESURE RADAR POUR LA DÉTECTION D'OBJETS

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**07.12.2022 Bulletin 2022/49**

(73) Proprietor: **Infineon Technologies AG
85579 Neubiberg (DE)**

(72) Inventors:
• **WEILAND, Lorenz Ferdinand Wilhelm
80637 München (DE)**
• **SANTRA, Avik
81541 München (DE)**

(74) Representative: **Neusser, Sebastian
Kraus & Weisert
Patentanwälte PartGmbB
Thomas-Wimmer-Ring 15
80539 München (DE)**

(56) References cited:
**US-A1- 2020 116 850    US-B2- 10 996 311**

• MERCURI MARCO ET AL: "Enabling Robust
Radar-Based Localization and Vital Signs
Monitoring in Multipath Propagation
Environments", IEEE TRANSACTIONS ON
BIOMEDICAL ENGINEERING, IEEE, USA, vol. 68,
no. 11, 17 March 2021 (2021-03-17), pages
3228-3240, XP011884294, ISSN: 0018-9294, DOI:
10.1109/TBME.2021.3066876 [retrieved on
2021-10-18]

**Description**

TECHNICAL FIELD

Various examples of the disclosure generally relate to detecting objects of a scene based on a radar measurement. Various examples of the disclosure specifically relate to pre-processing of radar measurement data.

BACKGROUND

Detecting objects can be helpful in various use cases. For instance, it can be helpful to detect passengers in a vehicle interior. For instance, thereby can be prevented that children are left behind unintentionally in the interior of a passenger vehicle.

For example, see Mercuri, Marco, et al. "Enabling robust radar-based localization and vital signs monitoring in multipath propagation environments." IEEE Transactions on Biomedical Engineering 68.11 (2021): 3228-3240. Also see, US 10 996 311 B2 or US 2020/116850 A1.

SUMMARY

Accordingly, there is a need for techniques that facilitate reliable and accurate detection of objects.

This need is met by the features of the independent claims. The features of the dependent claims define embodiments

A method includes obtaining a time sequence of measurement frames of a radar measurement of a scene. Each measurement frame of the time sequence of measurement frames includes data samples along at least a fast-time dimension and a slow-time dimension. A slow time of the slow-time dimension is incremented with respect to adjacent radar chirps of the radar measurement. A fast time of the fast-time dimension is incremented with respect to adjacent data samples. The method includes, for each one of at least one channel, determining covariances of the data samples for multiple fast times along the fast-time dimension and using the respective distributions of the data samples along the slow-time dimension. The method also includes determining a range map of the scene based on the covariances and using a spectrum analysis. The method also includes detecting one or more objects of the scene based on the range map.

A computer program or a computer-program product or a computer-readable storage medium includes program code. The program code can be loaded and executed by at least one processor. Upon loading and executing the program code, the at least one processor performs a method. The method includes obtaining a time sequence of measurement frames of a radar measurement of a scene. Each measurement frame of the time sequence of measurement frames includes data samples along at least a fast-time dimension and a slow-time dimension. A slow time of the slow-time dimension is incremented with respect to adjacent radar chirps of the radar measurement. A fast time of the fast-time dimension is incremented with respect to adjacent data samples. The method includes, for each one of at least one channel, determining covariances of the data samples for multiple fast times along the fast-time dimension and using the respective distributions of the data samples along the slow-time dimension. The method also includes determining a range map of the scene based on the covariances and using a spectrum analysis. The method also includes detecting one or more objects of the scene based on the range map.

The method may further include aggregating the measurement frames to obtain a further time sequence of aggregated frames. Each one of the aggregated frames samples a longer time duration along the slow-time dimension if compared to the multiple measurement frames. The covariances may then be determined for multiple entries of the aggregated frame offset along the fast-time dimension.

The aggregating of the subsequent ones of the multiple measurement frames may use a sliding window scheme along the time sequence of the measurement frames.

The method may further include selecting an aggregation factor of said aggregating based on an a-priori knowledge of an object motion of the one or more objects.

It would be possible that the covariances are incrementally updated based on earlier estimates of the covariances.

The method may further include reducing a count of the data samples along the slow-time dimension prior to said determining of the covariances.

Said reducing of the count of the data samples along the slow-time dimension includes combining multiple data samples having different slow times and having the same fast times.

Said reducing of the count of data samples along the slow-time dimension may include discarding multiple data samples having at least one slow time.

The at least one slow time for which the multiple data samples are discarded may be selected using a random or semi-random process.

It would be possible that the multiple data samples are discarded for multiple slow times, wherein the multiple slow times are permutated across two or more measurement frames that are aggregated to obtain an aggregated frame.

The method may further include reducing a count of the data samples along the fast-time dimension prior to said determining of the covariances.

The method may further include for each one of the measurement frames of the time sequence or for each one of multiple aggregated frames of a further time sequence of aggregated frames: determining multiple subframes, each subframe including a subset of the data samples along the fast-time dimension of the respective measurement or aggregated frame, and determining a respective matrix based on corresponding positions along the fast-time dimension and the slow-time dimension across the multiple subframes. The covariances may be determined based on the matrix.

It would be possible that the method further includes selecting a reduction factor of said reducing of the count of the data samples along the fast-time dimension based on a memory size of a memory of a processing device.

The method may further include aligning the distributions of the data samples with a predefined center value by subtracting or adding the center value to each value of the data samples.

The method may further include applying a low-pass or band-pass filter to the distributions of the data samples.

A cut-off frequency of the low-pass filter of the band-pass filter may be selected based on a-priori knowledge of an object motion of the one or more objects.

Each measurement frame of the time sequence of measurement frames may include the data samples further along a channel dimension. A channel of the channel dimension may be incremented for different receiver antennas used for the radar measurement. The covariances are determined for multiple channels along the channel dimension and using the respective distributions of the data samples along the slow-time dimension. The range map can be a range-angle map.

The spectrum analysis can be a 2-D or 3-D Capon spectrum analysis.

The scene could be a vehicle interior, wherein the one or more objects can be humans.

A device includes a processor and a memory. The processor can load program code from the memory and execute the program code. Upon executing the program code, the processor is configured to obtain a time sequence of measurement frames of a radar measurement of a scene. Each measurement frame of the time sequence of measurement frames includes data samples along at least a fast-time dimension and a slow-time dimension. A slow time of the slow-time dimension is incremented with respect to adjacent radar chirps of the radar measurement. A fast time of the fast-time dimension is incremented with respect to adjacent data samples. The processor is further configured to determine covariances of the data samples for multiple fast times along the fast-time dimension and using respective distributions of the data samples along the slow-time dimension. The processor is further configured to determine a range map of the scene based on the covariances and using a spectrum analysis. The processor is further configured to detect one or more objects of the scene based on the range map.

It is to be understood that the features mentioned above and those yet to be explained below may be used not only in the respective combinations indicated, but also in other combinations or in isolation without departing from the scope of the invention.

BRIEF DESCRIPTION OF THE DRAWINGS

FIG. 1 schematically illustrates a system including a radar sensor and a processing device according to various examples.

FIG. 2 schematically illustrates details with respect to the radar sensor according to various examples.

FIG. 3 is a flowchart of a method according to various examples.

FIG. 4 schematically illustrates a measurement frame according to various examples.

FIG. 5 schematically illustrates a data cube representation of the measurement frame according to various examples.

FIG. 6 schematically illustrates aggregation of multiple measurement frames of a temporal sequence into an aggregated frame according to various examples.

FIG. 7 schematically illustrates selection of multiple measurement frames to be aggregated into respective aggregated frames according to various examples.

FIG. 8 schematically illustrates selection of multiple measurement frames to be aggregated into respective aggregated frames using a sliding window scheme according to various examples.

FIG. 9 schematically illustrates a data-cube representation of an aggregated frame according to various examples.

FIG. 10 schematically illustrates a subframe of an aggregated frame according to various examples.

FIG. 11 schematically illustrates a 2-D range-angle map according to various examples.

DETAILED DESCRIPTION OF EMBODIMENTS

Some examples of the present disclosure generally provide for a plurality of circuits or other electrical devices. All references to the circuits and other electrical devices and the functionality provided by each are not intended to be limited to encompassing only what is illustrated and described herein. While particular labels may be assigned to the various circuits or other electrical devices disclosed, such labels are not intended to limit the scope of operation for the circuits and the other electrical devices. Such circuits and other electrical devices may be combined with each other and/or separated in any manner based on the particular type of electrical implementation that is desired. It is recognized that any circuit or other electrical device disclosed herein may include any number of microcontrollers, a graphics processor unit (GPU), integrated circuits, memory devices (e.g., FLASH, random access memory (RAM), read only memory (ROM), electrically programmable read only memory (EPROM), electrically erasable programmable read only memory (EEPROM), or other suitable variants thereof), and software which co-act with one another to perform operation(s) disclosed herein. In addition, any one or more of the electrical devices may be configured to execute a program code that is embodied in a non-transitory computer readable medium programmed to perform any number of the functions as disclosed.

In the following, examples of the disclosure will be described in detail with reference to the accompanying drawings. It is to be understood that the following description of examples is not to be taken in a limiting sense. The scope of the disclosure is not intended to be limited by the examples described hereinafter or by the drawings, which are taken to be illustrative only.

The drawings are not to be regarded as being schematic representations and elements illustrated in the drawings are not necessarily shown to scale. Rather, the various elements are represented such that their function and general purpose become apparent to a person skilled in the art. Any connection or coupling between functional blocks, devices, components, or other physical or functional units shown in the drawings or described herein may also be implemented by an indirect connections or coupling. A coupling between components may also be established over a wireless connection. Functional blocks may be implemented in hardware, firmware, software, or a combination thereof.

Hereinafter, techniques of detecting objects will be described. Various kinds and types of objects may be detected, depending on the use case. The techniques described herein can facilitate various use cases.

An example use case would be the detection of the presence of humans in a vehicle interior. A "child-left-behind" monitoring could be implemented. For instance, the location of persons in the vehicle may be detected. For instance, based on the techniques disclosed herein, it may be possible to detect the particular seat occupied by a person.

A further example use case would be detection of obstacles in the outside surrounding of a vehicle door. Thereby, damage to the vehicle door upon opening from the interior of the car due to oversight of such obstacles - e.g., rocks may be prevented.

Various techniques described herein facilitate object detection based on radar measurements.

For instance, a short-range radar measurement could be implemented. Here, radar chirps can be used to measure a position of one or more objects in a scene having extents of tens of centimeters or meters.

According to the various examples disclosed herein, a millimeter-wave radar sensor may be used to perform the radar measurement; the radar sensor operates as a frequencymodulated continuous-wave (FMCW) radar that includes a millimeter-wave radar sensor circuit, a transmitter, and a receiver. A millimeter-wave radar sensor may transmit and receive signals in the 20 GHz to 122 GHz range. Alternatively, frequencies outside of this range, such as frequencies between 1 GHz and 20 GHz, or frequencies between 122 GHz and 300 GHz, may also be used.

A radar sensor can transmit a plurality of radar pulses, such as chirps, towards a scene. This refers to a pulsed operation. In some embodiments the chirps are linear chirps, i.e., the instantaneous frequency of the chirps varies linearly with time.

A Doppler frequency shift can be used to determine a velocity of the target. Measurement data provided by the radar sensor can thus indicate depth positions of multiple objects of a scene. It would also be possible that velocities are indicated.

Compared to camera-based object detection, object detection based on a radar measurements can have some advantages such as: invariant to illumination conditions; preserving privacy.

Various techniques are based on the finding that object detection based on a radar measurement can face certain challenges. In particular, the signal-to-noise ratio of respective signals originating from electromagnetic waves reflected by the objects to be detected can be comparably low. For instance, where static objects are to be detected, e.g., a human sitting in a car, there may be only a small Doppler frequency-shift due to anatomical motion / vital signs, such as breathing or heartbeat. For non-living objects, e.g., rocks etc., there may be no Doppler frequency-shift. Accordingly, it can be difficult to detect objects by exploiting the Doppler frequency shift.

Furthermore, various techniques are based on the finding that such techniques of detecting objects based on radar measurements should be, at least to some degree, agnostic with respect to a mounting position of the radar sensor with respect to the scene. This is because often the use case imposes respective constraints with respect to the arrangement of the radar sensor. For instance, for passenger occupancy monitoring, it should be possible to mount the radar sensor in different positions in the vehicle interior, e.g., the rear-view mirror, the A/B/C pillar, or a particular position in the rooftop. This implies that the techniques should be able to facilitate flexible preprocessing of raw data samples so that people detection is facilitated in different positional degrees of freedom, e.g., range, azimuthal angle or elevation angle.

The techniques disclosed herein meet such requirements.

According to various examples, raw data of a radar measurement of a scene is pre-processed, to obtain a data structure. Based on this data structure, it is then possible to detect objects. The data structure is particularly suited for detecting objects.

The raw data can be in the form of measurement frames. Typically, a measurement frame includes data samples that are structured into fast-time dimension, slow-time dimension and optionally antenna channels. The measurement frame includes data samples over a certain sampling time for multiple radar pulses, specifically chirps. Slow time is incremented from chirp-to-chirp; fast time is incremented for subsequent samples.

Then, one or objects of the scene can be detected based on the data structure. For detecting the one or objects, and object detection algorithm can be employed. As a general rule, the particular type of object detection algorithm employed to detect objects is not germane for the functioning of the techniques described herein. For example, peak-finding could be employed after background subtraction. For instance, it would be possible to employ an unsupervised clustering algorithm, e.g., DBSCAN. It would also be possible to employ a neural network algorithm to detect objects in the data structure. For instance, a convolutional neural network algorithm may be employed. Such CNN may be appropriately trained, by using training data structures that are accompanied by - e.g., manually annotated - ground-truth labels.

According to various examples, a data structure is provided based on which one or objects of the scene can be detected by appropriate pre-processing of measurement frames of a radar measurement of a scene. Specifically, a range map may be obtained through pre-processing of measurement frames.

As a general rule, a 1-D range map - that is solely resolved for range dimension - could be used. It would also be possible to use a 2-D range-angular map that is resolved in range dimension and an angular dimension, e.g., azimuthal angle or elevation angle, thereby providing lateral resolution. It would even be possible to use a 3-D range-angular map that is resolved in range dimension and two angular dimensions, i.e., azimuthal angle or elevation angle.

The range map can be obtained by performing a spectrum analysis of a signal associated with the data samples of a measurement frame. Thus, the range spectrum can encode a relative contribution of frequencies in the signal that are associated with each range value. A 1-D spectrum analysis can be used to obtain the 1-D range map. For a 2-D or 3-D range-angle map, a 2-D or 3-D spectrum analysis can be used, e.g., a Capon estimator with or without diagonal loading could be used.

According to various examples, the range map is determined based on covariances of the data samples. More specifically, the covariances of the data samples are determined for multiple fast times and using distributions of the data samples as defined in slow-time dimension.

The covariances could be included in a covariance matrix. The covariances broadly define a correlation between observations along slow time at different fast times. This means that it is possible to determine a correlation between the slow-time variations of the data samples for different fast-time positions - these slow-time variations define a respective distribution of the data samples along slow-time dimension.

It has been found that determining the range map based on the covariances of the data samples has certain advantages, if compared to reference implementations. In particular, it is possible to increase the signal-to-noise ratio for object detection. Objects can be detected more reliably. This is, in particular, true if compared to a reference implementation where the object detection is implemented based on a 2-D Fast Fourier Transformation (FFT) of the measurement frames along the fast-time dimension in the slow-time dimension (to obtain a range-Doppler image, RDI) and, subsequently, digital beamforming for a range-Doppler position in the RDI to obtain angular resolution, e.g., a range-azimuthal map or a rangeelevation map.

According to various examples, detection of humans can be further facilitated by tailoring the pre-processing of the measurement frames in view of the expected Doppler-shift for vital signs of humans. Here, it is possible to aggregate multiple measurement frames into aggregated frames. These aggregated frames sample a longer duration. Therefore, also smaller Doppler-frequency shifts can be resolved, as would be expected for vital signs.

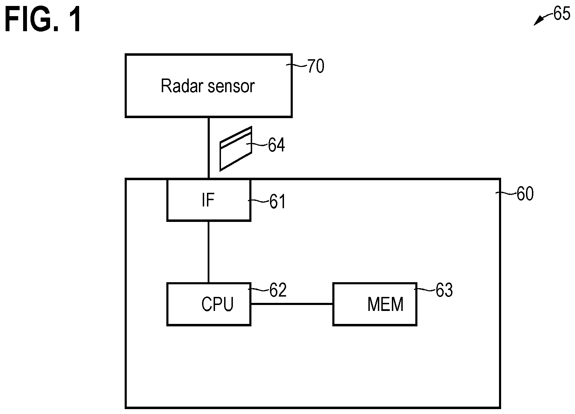

FIG. 1 schematically illustrates a system 25. The system 25 includes a radar sensor 70 and a processing device 20. The processing device 20 can obtain measurement data 24 from the radar sensor 70. The processor 22 can receive the measurement data 24 via an interface 21 and process the measurement data 24. For instance, the measurement data 24 could include measurement frames including samples of an ADC converter. It would also be possible that further pre-processing is implemented at the radar sensor 70; for instance, the radar sensor 70 could output a 1-D or 2-D maps of the scene, e.g., obtained from a spectrum analysis based on covariances of data samples at different fast times.

The processor 22 can load program code from a memory 23 and execute the program code. The processor 22 can then perform techniques as disclosed herein, e.g., pre-processing measurement data 24, determining covariances of data samples for multiple fast times and using distributions of the data samples along slow-time dimension, detecting objects based on a range spectrum, etc.. Details with respect to such processing will be explained hereinafter in greater detail; first, however, details with respect to the radar sensor 70 will be explained.

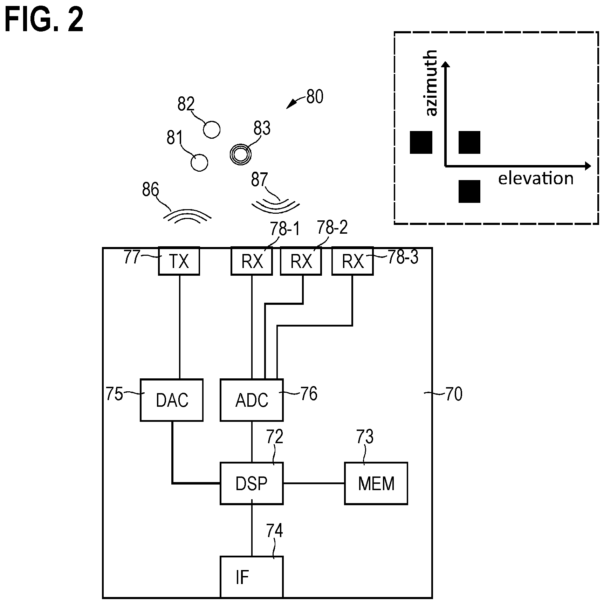

FIG. 2 illustrates aspects with respect to the radar sensor 70. The radar sensor 70 includes a processor 72 (labeled digital signal processor, DSP) that is coupled with a memory 73. Based on program code that is stored in the memory 73, the processor 72 can perform various functions with respect to transmitting radar pulses 86 using a transmit antenna 77 and a digital-to-analog converter (DAC) 75. Once the radar pulses 86 have been reflected by a scene 80, respective reflected radar pulses 87 can be detected by the processor 72 using an ADC 76 and multiple receive antenna 78-1, 78-2, 78-3 (e.g., ordered in a L-shape with half a wavelength distance; see inset of FIG. 2). The processor 72 can process raw data samples obtained from the ADC 76 to some larger or smaller degree. For instance, measurement frames could be determined and output. Also, spectrograms or covariances or maps may be determined.

The radar measurement can be implemented a basic frequencymodulated continuous wave (FMCW) principle. A frequency chirp can be used to implement the radar pulse 86. A frequency of the chirp can be adjusted between a frequency range of 57 GHz to 64 GHz. The transmitted signal is backscattered and with a time delay corresponding to the distance of the reflecting object captured by all three receiving antennas. The received signal is then mixed with the transmitted signal and afterwards low pass filtered to obtain the intermediate signal. This signal is of significant lower frequency as the transmitted signal and therefore the sampling rate of the ADC 76 can be reduced accordingly. The ADC may work with a sampling frequency of 2 MHz and a 12-bit accuracy.

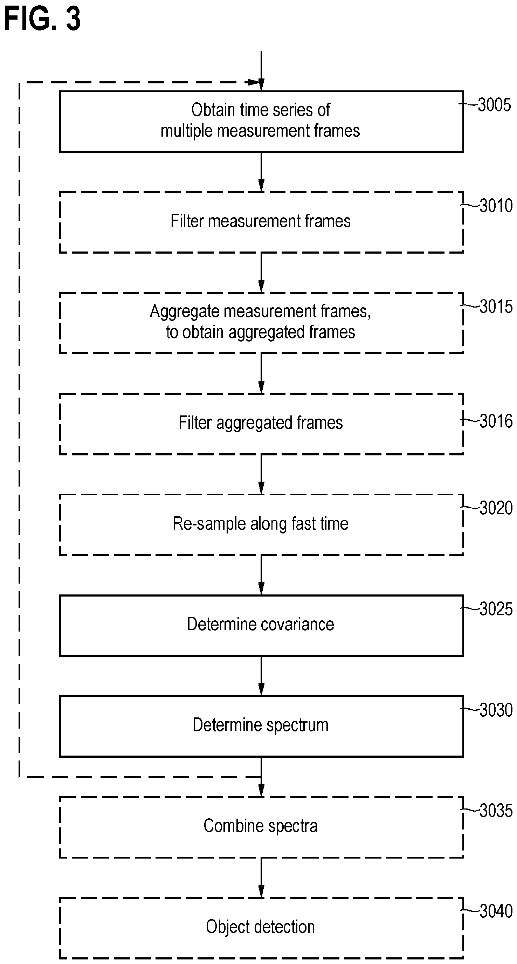

As illustrated, a scene 80 includes multiple objects 81-83. For instance, the objects 81, 82 may correspond to background, whereas the object 83 could pertain to a person in a vehicle interior. Based on the radar measurement, it is possible to detect objects of a certain type, e.g., persons. A respective method is described in FIG. 3.

FIG. 3 is a flowchart of a method according to various examples. FIG. 3 is a method of detecting objects in the scene based on radar measurements. The method of FIG. 3 could be executed by one or more processors. For instance, it would be possible that the method of FIG. 3 is executed by the processor 22 of the processing device 20, at least in part. Alternatively or additionally, at least parts of the method of FIG. 3 could be executed by the processor 72 of the radar sensor 70. In FIG. 3, optional boxes are labeled with dashed lines.

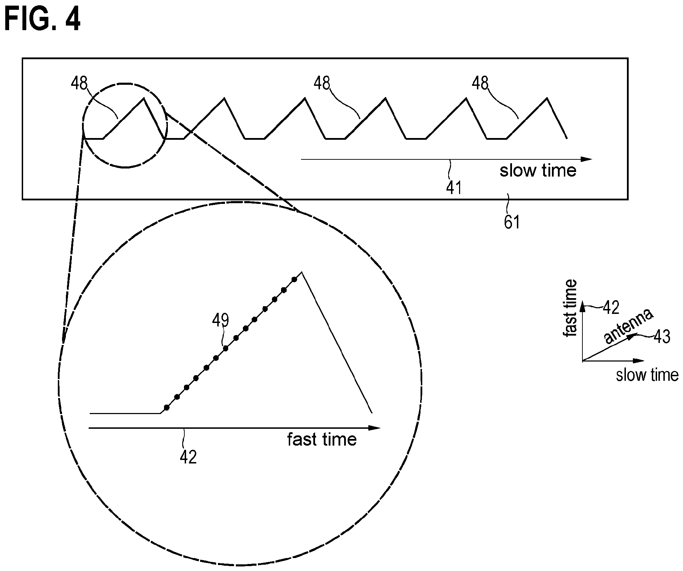

When discussing FIG. 3 below, reference will be made to FIGs. 4-11, to illustrate the respective boxes.

At box 3005, a time series of multiple measurement frames is obtained.

It optionally possible to apply one or more filters to the measurement frames, box 3010. For instance, it would be possible remove a mean of data along fast-time dimension of each chirp (a so-called moving target indication, MTI), i.e., along the first dimension of $X_{phy}(n)$.

An example measurement frame 61 is illustrated in FIG. 4.

FIG. 4 schematically illustrates aspects with respect to the measurement data 24. FIG. 4 schematically illustrates a structure of raw data in form of a measurement frame 61. Typically, a measurement frame 61 is defined by arranging data samples 49 obtained as raw data from the ADC (as explained in connection with FIG. 2) with respect to a fast-time dimension 42 and a slow-time dimension 41. A position along the fast-time dimension 42 is incremented for each subsequent readout from the ADC (this is illustrated in the circular inset in FIG. 4), whereas a position along the slow-time dimension 41 is incremented with respect to subsequent radar chirps 48. There can be an additional dimension which is the antenna/channel dimension 43 (not illustrated in FIG. 4), which provides angular resolution based on beamforming. For instance, in FIG. 2, an example with three receive channels has been discussed.

A typical physical frame rate of sensor is, e.g., $T_{F,phy} = 0.1s$ with, e.g., $N_{C,phy} = 64$ chirps.

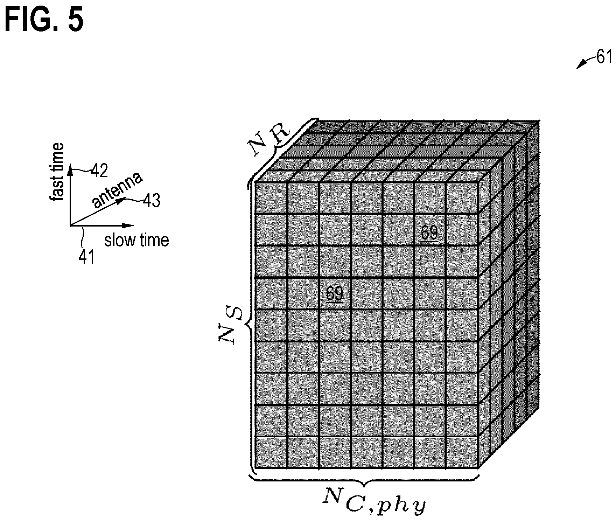

The measurement frame 61 can be represented by a data cube $X_{phy}(n) \in C^{N_S \times N_{C,phy} \times N_R}$ with $N_S$ samples per chirp 48, $N_{C,phy}$ chirps 48 per measurement frame 61, and $N_R$ (virtual) receive antennas. Such representation of the measurement frame 61 by a 3-D data cube is illustrated in FIG. 5. The entries 69 of the data cube correspond to the data samples 49.

Various examples are based on the finding the timing per measurement frame 61, e.g. , for $T_{F,phy} = 0.1s$, does not provide sufficient Doppler resolution for vital signs. Doppler of vital signs (respiratory rate and heartbeat rate) is in range of approx. **0.8** to **3Hz.**

Thus, to overcome such deficiencies, according to some examples, it would be possible to aggregate measurement frames of a time sequence to obtain a further time sequence of aggregated frames.

Each aggregated frame can sample a longer time duration along the slow-time dimension 41 if compared to the measurement frames 61.

Such aggregation can be optionally implemented at box 3015 in FIG. 3.

Such aggregation is generally optional. For instance, such aggregation may be, specifically, helpful for scenarios where living objects are detected, e.g., humans or animals. For non-living objects such as static obstacles, it may not be required to aggregate multiple measurement frames at box 3015.

Where multiple measurement frames are aggregated at box 3015, it is possible that subsequent processing steps are implemented based on the aggregated frames. For instance, covariances can be determined for multiple entries of the aggregated frames offset along the fast-time dimension 42 and using respective distributions of the data samples along slow-time dimension of the aggregated frames.

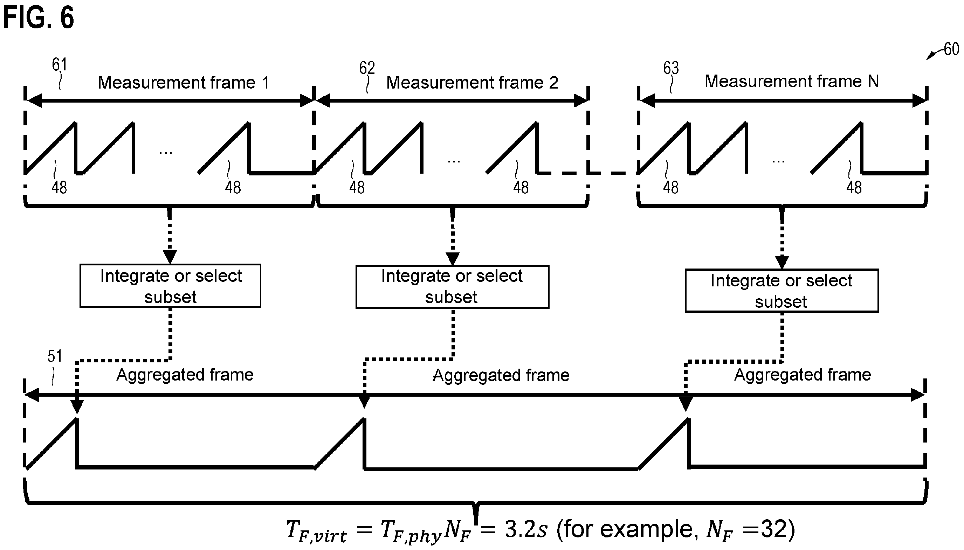

Such aggregating of multiple measurement frames according to box 3015 is illustrated further in connection with FIG. 6, FIG. 7, FIG. 8, and FIG. 9.

FIG. 6 illustrates a time sequence 60 of multiple measurement frames 61-63. These measurement frame 61-63 are then aggregated to obtain an aggregated frame 51 (which could also be referred to as virtual frame). For instance, the aggregated frame 51 could be obtained by coherent processing of $N_F = 32$ frames ($N_F$ defining an aggregation factor) to get frame rate of $T_{F,virt} = T_{F,phy} N_F = 3.2s.$

Such increase time duration sampled by the aggregated frame can be used for unambiguous Doppler detection of micro motions, e.g., based on human vital signs.

In one example, all data samples 49 included in the aggregated measurement frames 61-63 could be included in the aggregated frame 51. In other examples, it would be possible to reduce the count of data samples 49 in the aggregated frame 51 if compared to the sum of counts of data samples 49 in the measurement frames 61-63. Specifically, the count of data samples 49 could be reduced along the slow-time dimension 41. This helps to reduce the complexity in the processing.

For instance, in the scenario of FIG. 6, the data samples of one or more or even all chirps 48 of each one of the measurement frame 61-63 are integrated/summed to obtain the signal 41 respective chirp in the aggregated frame 51.

Alternatively it would also be possible to select a subset of chirps 48. I.e., it would be possible to discard data samples from each one of the measurement frames 61-63 for certain slow-time positions. For instance, it would be possible to implement a (e.g., random) permutation of the selected or integrated chirps to be included in an aggregated frame along the time sequence 60 of measurement frames 61-63. More generally, the slow-time positions for which data samples 49 are discarded can be selected in a random or semi-random process.

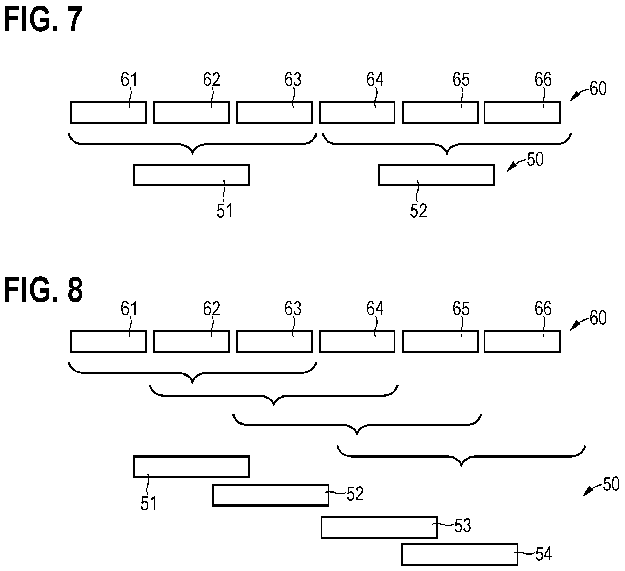

Next, in connection with FIG. 7 in FIG. 8, aspects with respect to selecting the measurement frames that are aggregated into aggregated frames will be described.

FIG. 7 illustrates aspects with respect to a time sequence 60 of measurement frames 61-66. In the illustrated example of FIG. 7, the measurement frames 61-63 are aggregated to obtain the aggregated frame 51 and the measurement frames 64-65 are aggregated to obtain the aggregated frame 52. The aggregated frames 51, 52 form a respective time sequence 50.

For each one of the aggregated frames 51,52, covariances of the data samples at different fast times could be determined.

As will be appreciated from FIG. 7, each one of the measurement frames 61-66 is aggregated into a single corresponding aggregated frame 51, 52. This is different in the scenario of FIG. 8.

FIG. 8 illustrates aspects with respect to a time sequence 60 of measurement frames 61-66. In the illustrated example, a sliding window scheme is used, to respectively aggregate 3 measurement frame 61-66 into a corresponding aggregated frame 51-54.

Using the sliding window scheme of $N_F$ frames for a construction of the aggregated frame would make it possible to maintain the frame rate of the time sequence 60 of measurement frames, while still obtaining the aggregated frames 51-54 having an increased duration. Thus, a time resolution of the object detection can be increased if compared to the scenario of FIG. 7.

As a general rule, the aggregation factor could be set based on a-priori knowledge of an object motion of an object to be detected in the scene. For instance, the aggregation factor can be chosen as large as necessary to resolve respective Doppler frequency shifts, but as small as possible to retain a temporal resolution.

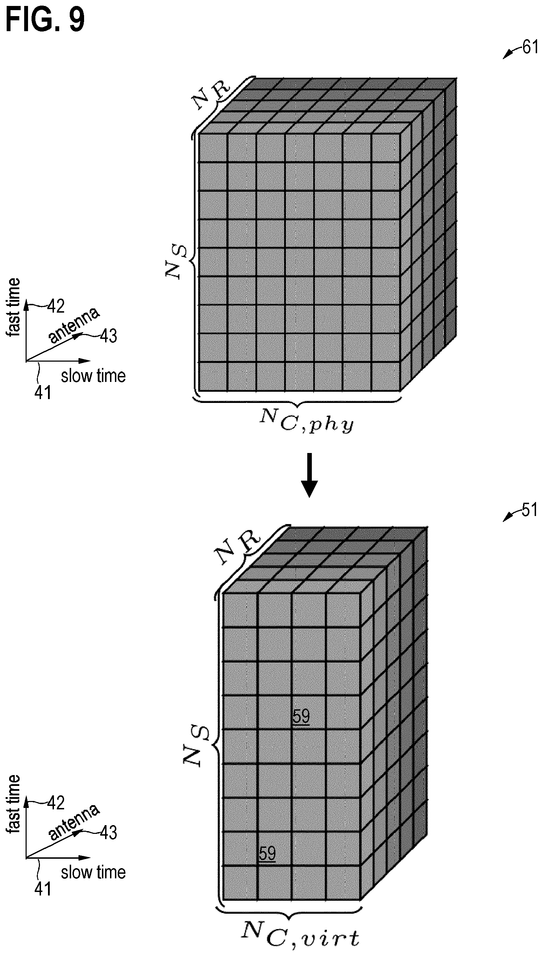

FIG. 9 schematically illustrates the data-cube representation of the initial measurement frame 61 and the data-cube representation of the aggregated frame 51. Respective entries 59 of the aggregated frame 51 can be obtained by selecting subset of data samples or integrating data samples, as explained above.

Generally, the aggregated frames 51-53 can be denoted as $Z(n) \in C^{N_S \times N_{C,virt} \times NR}$ (n incrementing along the time sequence 50) and includes data samples for a sampling duration of, e.g., $T_{F,virt} = T_{F,phy} N_F = 3.2s.$

It would then be possible to apply one or more filters to the aggregated frames, cf. FIG. 3: box 3016.

For instance, it would be possible to remove the mean along slow-time dimension 41, e.g., if the mean is not already zero mean which can depend on the filtering at box 3010 and the aggregation.

Alternatively or additionally, at box 3016 it would be possible to use a low-pass filter and/or band-pass filter with random/fixed cut-off to filter out spectrum corresponding to vital signs along the slow-time dimension 41 of $Z(n)$. Thus, a cut-off-frequency of a spectral filter could be set based on a-priori knowledge of the object motion.

An MTI filter could be applied as $Z(n) \leftarrow Z(n) - \alpha Z(n-1)$ with, e.g., $\alpha = 1$.

An optional add-on would use long-term data of static background in case of no targets present for MTI. The background could be subtracted.

Next, at box 3020, the aggregated frames 51-53 or - if box 3015 is not executed - the measurement frames 61-66 can be further conditioned to facilitate efficient object detection.

In particular, further pre-processing is possible to facilitate determining the covariances at box 3025 of the data samples at different fast times in an efficient manner.

This is based on the finding that the range-angle covariance matrix for $Z(n)$ has dimension $N_S N_R \times N_S N_R$. There are, however, only $N_{C,virt}$ entries of dimension $N_S N_R$ in each aggregated frame 51-53 or $N_C$ entries in each measurement frame 61-66. Further, $N_S N_R$ can be very large, so processing and storing of covariance matrix can be difficult. Further, sufficient data samples of dimension $N_S \times N_R$ are required for a reasonable estimation of a range-angle covariance, but there may have only be a single aggregated frame 51-53 available of sampling duration $T_{F,virt} = T_{F,phy} N_F = 3.2s$.

To address such issues, it would be possible to increase the aggregation factor $N_F$ significantly. However, such techniques may not be desirable in all circumstances as either the frame rate decreases or the delay increases and still $N_S N_R$ might be significantly too large for processing and memory.

According to various examples, it is possible to reduce the count of data samples 49 along the fast-time dimension 42, at box 3020. An example implementation is described below.

First, an effective number of fast-time positions is selected and the corresponding subframes are extracted from the aggregated frames 51-53 as additional virtual samples.

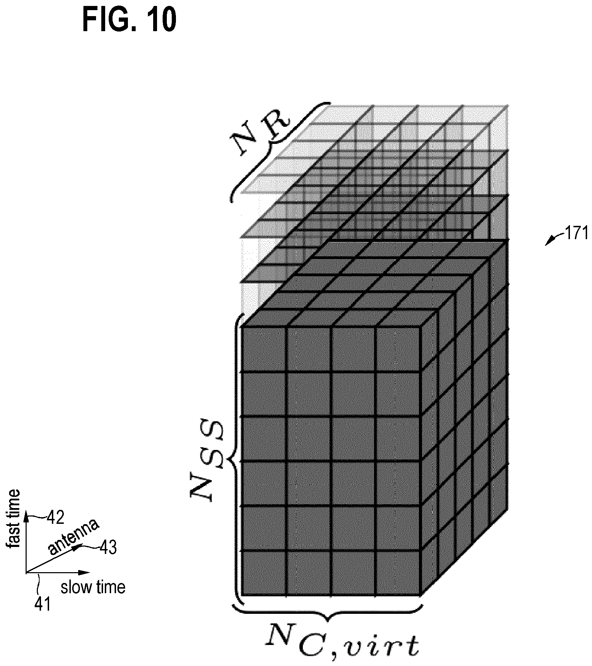

Thus, an effective number of data samples $N_{SS}$ along the fast-time dimension 42 is selected and extracted, e.g., $L = N_S - N_{SS} + 1$ different $N_{SS} \times N_{C,virt} \times N_R$ subframes 171 (cf. FIG. 10) of the aggregated frame $Z(n)$ 51-53 are selected , each shifted by 1 along the fast-time dimension 42.

For example, if the aggregated frame has a dimensionality of 128 × 16 × 8 (slow-time dimension 41 × fast-time dimension 42 × channel dimension 43), and an effective fast-time sampling size of $N_{SS} = 32$ is selected, it is possible to construct $L = N_S - N_{SS} + 1 = 128 - 32 + 1 = 97$ subframes 171 of dimension 32 × 16 × 8.

These subframes can then be reshaped into a data matrix. Here, only the slow-time dimension 41 can be used as additional samples, to construct the data matrix of dimension $Y(n) \in C^{N_{SS}N_R \times N_{C,virt}L}$. This matrix can then be used to determine the covariances of the data samples 49.

This is based on the following rationale: After creating the subframes, each of the subframes has dimension $N_{SS} \times N_{C,virt} \times N_R$. However, for calculating the covariances, an explicit estimation of the Doppler frequency of the targets is not required. Thus, the dimension $N_{C,virt}$ can be used as additional samples of dimension $N_{SS} \times N_R$. This is reflected by reshaping into a matrix and concatenating all reshaped subframes accordingly.

The described approach exploits the shift-invariance of the data samples along the fast-time dimension 42. Due to the Vandermonde structure of the range-response (which constitutes the fast-time dimension 42 of the measurement frames 61-66 and the aggregated frames 51-54), a continuous subframe of data samples 49 along the fast-time dimension 42 will also obey a Vandermonde structure. Thus, it is possible to construct the subframes of smaller dimension while preserving the relevant information.

Above, an implementation reducing the sample count along the fast-time dimension 42 has been explained that operates based on the aggregated frames 51-53. A similar technique can be used where the measurement frames 61-66 are not aggregated. Here, a matrix of $Y(n) \in C^{N_{SS}N_R \times N_C L}$ can be constructed.

In any case, $N_{SS}$ defines a reduction factor for reducing the count of the data samples 49 along the fast-time dimension 42. Such reduction factor could be set, e.g., based on a memory size of a respective processing device executing the covariance estimation. The reduction factor could also be set based on the dimensionality of the respective frame 51-53, 61-66, e.g., $N_S$ as the dimensionality along the fast-time dimension or $N_{C,virt}$ or $N_C$ as the dimensionality along the slow-time dimension 41.

Thereby, a sufficiently large count of data samples 49 for covariance estimation is available for each frame 61-66, 51-53. At the same time, the effective size of the covariance matrix to be estimated is decreased which simplifies processing and relaxes memory requirements.

Next, at box 3025, the covariances are determined for the data samples 49 along fast-time dimension 42. A covariance matrix can be determined.

For instance, in a scenario where the matrix $Y(n)$ is not constructed (e.g., box 3020 is not executed), the (co)variances can be determined for each row of $Z(n) \in C^{N_S \times N_{C,virt} \times N_R := 1}$ (corresponding to different fast-time positions along the fast-time dimension 42; and assuming a single channel) taking the data samples along the slow-time dimension 41 as observations. A respective covariance matrix $R(n)$ of dimension $N_S \times N_S$ is obtained.

As a general rule, the covariance of two random variables (corresponding to the rows $Z_1$, $Z_2$ of $Z(n)$) is given by

$$cov(Z_1, Z_2) = \frac{1}{N-1} \sum_{i=1}^{N} \left( Z_{1,i} - \mu_1 \right)^* (Z_{2,i} - \mu_2),$$

where $\mu_1, \mu_2$ are the mean values of the observations along slow-time dimension 41.

If $N_R > 1$, this can be generalized, to obtain a joint range-angle covariance matrix $R(n)$ of dimension $N_{SS}N_R \times N_{SS}N_R$.

Where the matrix $Y(n)$ is constructed, the joint range-angle covariance $R(n)$ of dimension $N_{SS}N_R \times N_{SS}N_R$ can be calculated using $R(n) \propto Y(n)Y^H(n)$.

Calculating the covariances ab-initio for every (aggregated) frame 61-66, 51-53 can be computationally expensive (cf. FIG. 3, where boxes 3005-3030 can be iteratively executed). Accordingly, it is possible to incrementally update the covariances for subsequent iterations of box 3025, based on respective earlier estimations.

This can help to smooth the covariances and avoid measurement artefacts.

For instance, incremental updates of the (inverse) covariance would be possible using rank-1 updates. Alternatively or additionally, incremental updates of the (inverse) covariance using a weighted average would be possible.

The inverse covariance matrix estimation for $k^{th}$ iteration of box 3025 can be updated using the estimate from the k-1$^{th}$ iteration using Sherman-Morrison Woodbury inversion lemma as below

$$\widehat{Q_k} = \left( \widehat{R_{k-1}} + x_k x_k^T \right)^{-1}$$
$$= \hat{R}_{k-1}^{-1} - \hat{R}_{k-1}^{-1} x_k \left( I + x_k^T \hat{R}_{k-1}^{-1} x_k \right)^{-1} x_k^T \hat{R}_{k-1}^{-1}$$
$$= \widehat{Q_{k-1}} - \widehat{Q_{k-1}} x_k \left( 1 + x_k^T Q_{k-1} x_k \right)^{-1} x_k^T \widehat{Q_{k-1}}$$
$$= \widehat{Q_{k-1}} - \widehat{Q_{k-1}} x_k x_k^T \widehat{Q_{k-1}} \frac{1}{1 + x_k^T Q_{k-1} x_k}$$

$x_k$ is a column of Y(n). If $\hat{Q}_0$ is the covariance matrix estimated during factory calibration, e.g., installation of the chip in the vehicle, the estimated covariance matrix at $k^{th}$ iteration can be expressed as weighted average of the $\hat{Q}_0$ and the updated covariance

$$\widetilde{Q_k} = \alpha \hat{Q}_0 + (1 - \alpha) \widehat{Q_k}$$

where $\alpha \in (0,1)$

Then, at box 3030, based on the covariances, a range map can be determined, to facilitate detection of one or more objects in the scene.

For instance, a 1-D range map could be determined. It would also be possible to determine a 2-D range-angle map or a 3-D range-angle map, if the measurement data 24 is resolved along the channel dimension 43.

For determining the range map, a spectrum analysis such as Capon, MUSIC, etc. can be used. For example, the Capon estimator (w/ or w/o diagonal loading) is given by

$$P(r, \theta) = \frac{1}{w^H(r,\theta) R^{-1} w(r,\theta)},$$

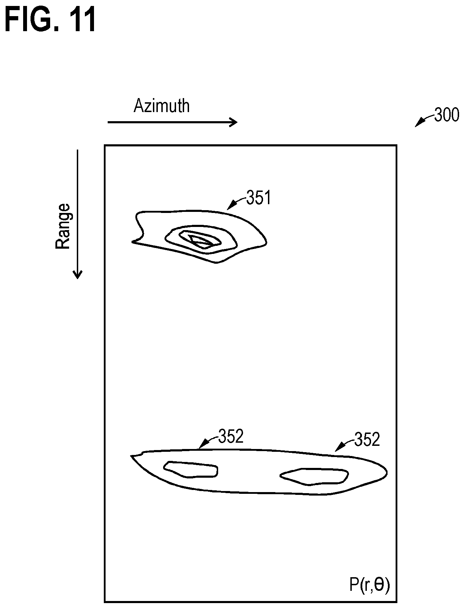

in case of range-azimuth imaging (cf. FIG. 11 which illustrates the respective range-azimuth intensity map 300 as a contour plot; three persons 351-353 can be separated, e.g., a driver and two rear-seat passengers in a passenger vehicle), or by

$$P(r, \theta, \phi) = \frac{1}{w^H(r,\theta,\phi) R^{-1} w(r,\theta,\phi)},$$

in case of range-azimuth-elevation imaging. Thus, 2-D or 3-D Capon spectrum analysis can be used. Whether a 3-D resolution is required can depend on the use case and the mounting of the radar sensor in the scene.

At optional box 3035, it would be possible to combine multiple range maps obtained for subsequent object detection. Thereby, the signal-to-noise ratio can be further increased. Such combination is, in particular, possible for static objects. For instance, it would be possible to employ a sliding window scheme for the combination of the range maps. The combination could be implemented using an integration, e.g., using the mean or geometric mean. This would promote equal energy in a range bin.

Finally, at box 3040, the object detection can be executed. As explained above, various object detection algorithms can be employed. For instance, a constant false alarm rate (CFAR) algorithm can be used, which calculates an adaptive threshold value due to the estimated noise floor. For instance, an order-static CFAR (OS-CFAR) could be used. This can be followed by unsupervised clustering or peak-finding. A NN may be employed.

For vehicle-interior detection of persons, it would be possible to assign detected objects to zones. For instance, it would be possible to use a *m* of *k* decision rule, i.e., if in the last *k* frames there were at least *m* detections within a zone it is marked as occupied.

Summarizing, above techniques have been disclosed that facilitate estimation of a joint range-angle covariance based on the aggregated Doppler frames. This results in a decreased frame rate compared to conventional solutions. A Reduced computational complexity is possible due to low frame rate.

The covariances can be smoothed across time by incrementally updating the covariances.

The techniques enable the localization of closely spaced static human targets within a car or, more generally, object detection of living and non-living objects.

The disclosed techniques are generic with respect to different sensor locations of the radar sensor with respect to the scene.

Although the invention has been shown and described with respect to certain preferred embodiments, equivalents and modifications will occur to others skilled in the art upon the reading and understanding of the specification. The present invention includes all such equivalents and modifications and is limited only by the scope of the appended claims.

**Claims**

1. A method, comprising:

   - obtaining a time sequence (60) of measurement frames (61-66) of a radar measurement of a scene (80), each measurement frame (61-66) of the time sequence (60) of measurement frames (61-66) comprising data samples (49) along at least a fast-time dimension (42) and a slow-time dimension (41), a slow time of the slow-time dimension (41) being incremented with respect to adjacent radar chirps (48) of the radar measurement, a fast time of the fast-time dimension being incremented with respect to adjacent data samples (49),
   - for each channel of at least one channel: determining covariances of the data samples for multiple fast times along the fast-time dimension and using respective distributions of the data samples along the slow-time dimension, and
   - determining a range map (300) of the scene based on the covariances and using a spectrum analysis,
   - detecting one or more objects (83, 351, 352, 353) of the scene based on the range map (300).

2. The method of claim 1, further comprising:

   - aggregating (3015) the measurement frames (61-66) to obtain a further time sequence (50) of aggregated frames (51-54), each one of the aggregated frames (51-54) sampling a longer time duration along the slow-time dimension (41) if compared to the multiple measurement frames (61-66),

   wherein the covariances are determined for multiple entries (59) of the aggregated frames (51-54) offset along the fast-time dimension (42).

3. The method of claim 2,
   wherein said aggregating (3015) of the subsequent ones of the multiple measurement frames (61-66) uses a sliding window scheme along the time sequence (60) of the measurement frames (61-66).

4. The method of claim 2 or 3, further comprising:

   - selecting an aggregation factor of said aggregating based on an a-priori knowledge of an object motion of the one or more objects (83, 351, 352, 353).

**5.** The method of any one of the preceding claims,
wherein the covariances are incrementally updated based on earlier estimates of the covariances.

**6.** The method of any one of the preceding claims, further comprising:

- reducing a count of the data samples (49) along the slow-time dimension (41) prior to said determining of the covariances.

**7.** The method of claim 6,
wherein said reducing of the count of the data samples (49) along the slow-time dimension (41) comprises:

- combining multiple data samples (49) having different slow times and having the same fast times.

**8.** The method of claim 6 or 7,
wherein said reducing of the count of the data samples (49) along the slow-time dimension comprises:

- discarding multiple data samples (49) having at least one slow time.

**9.** The method of claim 8,
wherein the at least one slow time for which the multiple data samples (49) are discarded is selected using a random or semi-random process.

**10.** The method of claim 8 or 9,
wherein the multiple data samples (49) are discarded for multiple slow times, the multiple slow times being permutated across two or more measurement frames (61-63) that are aggregated to obtain an aggregated frame (51-53).

**11.** The method of any one of the preceding claims, further comprising:

- reducing a count of the data samples (49) along the fast-time dimension (42) prior to said determining of the covariances.

**12.** The method of claim 11, further comprising:

- for each one of the measurement frames (61-66) of the time sequence (60) or for each one of multiple aggregated frame (51-54) of a further time sequence (50) of aggregated frames (51-54): determining multiple subframes (171), each subframe (171) comprising a subset of the data samples (49) along the fast-time dimension (42) of the respective measurement or aggregated frame (61-66, 51-54), and determining a respective matrix based on corresponding positions along the fast-time dimension (42) and the slow-time dimension (41) across the multiple subframes (171),

wherein the covariances are determined based on the matrix.

**13.** The method of claim 11 or 12, further comprising:

- selecting a reduction factor of said reducing of the count of the data samples (49) along the fast-time dimension (42) based a memory size of a memory (23) of a processing device (20) .

**14.** The method of any one of the preceding claims, further comprising:

- applying a low-pass or band-pass filter to the distributions of the data samples (49),
- selecting a cut-off- frequency of the low-pass filter or the band-pass filter based on an a-priori knowledge of an object motion of the one or more objects (83, 351, 352, 353).

**15.** The method of any one of the preceding claims,

wherein each measurement frame (61-66) of the time sequence (60) of measurement frames (61-66) comprises the data samples (49) further along a channel dimension (43), a channel of the channel dimension (43) being incremented for different receiver antennas (78-1, 78-2, 78-3) used for the radar measurement,

wherein the covariances are determined for multiple channels along the channel dimension (43) and using the respective distributions of the data samples (49) along the slow-time dimension (41),
wherein the range map (300) is a range-angle map (300).

**Patentansprüche**

1. Verfahren, umfassend:

   - Erhalten einer Zeitsequenz (60) von Messrahmen (61-66) einer Radarmessung einer Szene (80), wobei jeder Messrahmen (61-66) der Zeitsequenz (60) von Messrahmen (61-66) Datenabtastungen (49) entlang zumindest einer Fast-Time-Dimension (42) und einer Slow-Time-Dimension (41) umfasst, wobei eine Slow-Time der Slow-Time-Dimension (41) bezüglich benachbarter Radar-Chirps (48) der Radarmessung inkrementiert wird, eine Fast-Time der Fast-Time-Dimension bezüglich benachbarter Datenabtastungen (49) inkrementiert wird,
   - für jeden Kanal mindestens eines Kanals: Bestimmen von Kovarianzen der Datenabtastungen für mehrere Fast-Times entlang der Fast-Time-Dimension und unter Verwendung jeweiliger Verteilungen der Datenabtastungen entlang der Slow-Time-Dimension, und
   - Bestimmen einer Range-Map (300) der Szene basierend auf den Kovarianzen und unter Verwendung einer Spektrumanalyse,
   - Detektieren eines oder mehrerer Objekte (83, 351, 352, 353) der Szene basierend auf der Range-Map (300).

2. Verfahren nach Anspruch 1, ferner umfassend:

   - Aggregieren (3015) der Messrahmen (61-66), um eine weitere Zeitsequenz (50) aggregierter Rahmen (51-54) zu erhalten, wobei jeder der aggregierten Rahmen (51-54) eine längere Zeitdauer entlang der Slow-Time-Dimension (41) im Vergleich zu den mehreren Messrahmen (61-66) abtastet,

   wobei die Kovarianzen für mehrere Einträge (59) der aggregierten Rahmen (51-54), versetzt entlang der Fast-Time-Dimension (42) bestimmt werden.

3. Verfahren nach Anspruch 2,
   wobei das Aggregieren (3015) der anschließenden der mehreren Messrahmen (61-66) ein Gleitfensterschema entlang der Zeitsequenz (60) der Messrahmen (61-66) verwendet.

4. Verfahren nach Anspruch 2 oder 3, ferner umfassend:

   - Auswählen eines Aggregationsfaktors des Aggregierens basierend auf einer A-priori-Kenntnis einer Objektbewegung des einen oder der mehreren Objekte (83, 351, 352, 353).

5. Verfahren nach einem der vorstehenden Ansprüche,
   wobei die Kovarianzen basierend auf früheren Schätzungen der Kovarianzen inkrementell aktualisiert werden.

6. Verfahren nach einem der vorstehenden Ansprüche, ferner umfassend:

   - Reduzieren einer Zählung der Datenabtastungen (49) entlang der Slow-Time-Dimension (41) vor dem Bestimmen der Kovarianzen.

7. Verfahren nach Anspruch 6,
   wobei das Reduzieren der Zählung der Datenabtastungen (49) entlang der Slow-Time-Dimension (41) umfasst:

   - Kombinieren mehrerer Datenabtastungen (49), die unterschiedliche Slow-Times und die gleichen Fast-Times aufweisen.

8. Verfahren nach Anspruch 6 oder 7,
   wobei das Reduzieren der Zählung der Datenabtastungen (49) entlang der Slow-Time-Dimension umfasst:

   - Verwerfen mehrerer Datenabtastungen (49), die mindestens eine Slow-Time aufweisen.

**9.** Verfahren nach Anspruch 8,
wobei die mindestens eine Slow-Time, für die die mehreren Datenabtastungen (49) verworfen werden, unter Verwendung eines zufälligen oder semi-zufälligen Prozesses ausgewählt wird.

**10.** Verfahren nach Anspruch 8 oder 9,
wobei die mehreren Datenabtastungen (49) für mehrere Slow-Times verworfen werden, wobei die mehreren Slow-Times über zwei oder mehr aggregierte Messrahmen (61-63) permutiert werden, um einen aggregierten Rahmen (51-53) zu erhalten.

**11.** Verfahren nach einem der vorstehenden Ansprüche, ferner umfassend:

- Reduzieren einer Zählung der Datenabtastungen (49) entlang der Fast-Time-Dimension (42) vor dem Bestimmen der Kovarianzen.

**12.** Verfahren nach Anspruch 11, ferner umfassend:

- für jeden der Messrahmen (61-66) der Zeitsequenz (60) oder für jeden mehrerer aggregierter Rahmen (51-54) einer weiteren Zeitsequenz (50) aggregierter Rahmen (51-54): Bestimmen mehrerer Unterrahmen (171), wobei jeder Unterrahmen (171) einen Teilsatz der Datenabtastungen (49) entlang der Fast-Time-Dimension (42) des jeweiligen Mess- oder aggregierten Rahmens (61-66, 51-54) umfasst, und Bestimmen einer jeweiligen Matrix basierend auf entsprechenden Positionen entlang der Fast-Time-Dimension (42) und der Slow-Time-Dimension (41) über die mehreren Unterrahmen (171),

wobei die Kovarianzen basierend auf der Matrix bestimmt werden.

**13.** Verfahren nach Anspruch 11 oder 12, ferner umfassend:

- Auswählen eines Reduktionsfaktors des Reduzierens der Zählung der Datenabtastungen (49) entlang der Fast-Time-Dimension (42) basierend auf einer Speichergröße eines Speichers (23) einer Verarbeitungsvorrichtung (20) .

**14.** Verfahren nach einem der vorstehenden Ansprüche, ferner umfassend:

- Anwenden eines Tiefpass- oder Bandpassfilters an den Verteilungen der Datenabtastungen (49),
- Auswählen einer Grenzfrequenz des Tiefpassfilters oder des Bandpassfilters basierend auf einer A-priori-Kenntnis einer Objektbewegung des einen oder der mehreren Objekte (83, 351, 352, 353).

**15.** Verfahren nach einem der vorstehenden Ansprüche,

wobei jeder Messrahmen (61-66) der Zeitsequenz (60) von Messrahmen (61-66) die Datenabtastungen (49) ferner entlang einer Kanaldimension (43) umfasst, wobei ein Kanal der Kanaldimension (43) für unterschiedliche Empfängerantennen (78-1, 78-2, 78-3) inkrementiert wird, die für die Radarmessung verwendet werden, wobei die Kovarianzen für mehrere Kanäle entlang der Kanaldimension (43) und unter Verwendung der jeweiligen Verteilungen der Datenabtastungen (49) entlang der Slow-Time-Dimension (41) bestimmt werden, wobei eine Range-Map (300) eine Range-Winkel-Map (300) ist.


**Revendications**

**1.** Procédé, comprenant :

- obtenir une séquence (60) temporelle de trames (61-66) de mesure d'une mesure radar d'une scène (80), chaque trame (61-66) de mesure de la séquence (60) temporelle de trames (61-66) de mesure comprenant des échantillons (49) de données le long d'au moins une dimension (42) de temps rapide et une dimension (41) de temps lent, un temps lent de la dimension (41) de temps lent étant incrémenté par rapport à des piaillements (48) radar voisins de la mesure radar, un temps rapide de la dimension de temps rapide étant incrémenté par rapport à des échantillons (49) de données voisins,
- pour chaque canal d'au moins un canal : déterminer des covariances des échantillons de données pour de multiples temps rapides le long de la dimension de temps rapide et utiliser des distributions respectives des échantillons de données le long de la dimension de temps lent, et

- déterminer une carte (300) de portée de la scène sur la base des covariances et en utilisant une analyse de spectre,

- détecter un ou plusieurs objets (83, 351, 352, 353) de la scène sur la base de la carte (300) de portée.

2. Procédé suivant la revendication 1, comprenant en outre :

- agréger (3015) les trames (61-66) de mesure pour obtenir une autre séquence (50) temporelle de trames (51-54) agrégées, chacune des trames (51-54) agrégées échantillonnant une durée de temps plus longue le long de la dimension (41) de temps lent par rapport aux multiples trames (61-66) de mesure,

dans lequel on détermine les covariances pour des entrées (59) multiples des trames (51-54) agrégées décalées le long de la dimension (42) de temps rapide.

3. Procédé suivant la revendication 2,
dans lequel ladite agrégation (3015) des trames subséquentes des multiples trames (61-66) de mesure utilise un plan de fenêtre glissante le long de la séquence (60) temporelle des trames (61-66) de mesure.

4. Procédé suivant la revendication 2 ou 3, comprenant en outre :

- sélectionner un facteur d'agrégation de ladite agrégation sur la base d'une connaissance à priori d'un mouvement d'un objet de l'un ou des plusieurs objets (83, 351, 352, 353).

5. Procédé suivant l'une quelconque des revendications précédentes,
dans lequel on met à jour par incrément les covariances sur la base d'estimations précédentes des covariances.

6. Procédé suivant l'une des revendications précédentes, comprenant en outre :

- réduire un compte des échantillons (49) de données le long de la dimension (41) de temps lent, avant ladite détermination des covariances.

7. Procédé suivant la revendication 6,
dans lequel ladite réduction du compte des échantillons (49) de données le long de la dimension (41) de temps lent, comprend :

- combiner de multiples échantillons (49) de données ayant des temps lents différents et ayant les mêmes temps rapides.

8. Procédé suivant la revendication 6 ou 7,
dans lequel ladite réduction des échantillons (49) de données le long de la dimension de temps lent comprend :

- écarter de multiples échantillons (49) de données ayant au moins un seul temps long.

9. Procédé suivant la revendication 8,
dans lequel le au moins un seul temps lent, pour lequel on écarte les multiples échantillons (49) de données, est sélectionné en utilisant un processus aléatoire ou semi-aléatoire.

10. Procédé suivant la revendication 8 ou 9,
dans lequel on écarte les multiples échantillons (49) de données pour de multiples temps lents, les multiples temps lents étant permutés entre deux ou plusieurs trames (61-63) de mesure, qui sont agrégées pour obtenir une trame (51-53) agrégée.

11. Procédé suivant l'une quelconque des revendications précédentes, comprenant en outre :

- réduire un compte des échantillons (49) de données le long de la dimension (42) de temps rapide, avant ladite détermination des covariances.

**12.** Procédé suivant la revendication 11, comprenant en outre :

- pour chacune des trames (61-66) de mesure de la séquence (60) temporelle ou pour chacune des multiples trames (51-54) agrégées d'une autre séquence (50) temporelle de trames (51-54) agrégées : déterminer de multiples sous-trames (171), chaque soustrame (171) comprenant un sous-ensemble des échantillons (49) de données le long de la dimension (42) de temps rapide de la trame (61-66, 51-54) de mesure ou agrégée respective et déterminer une matrice respective, sur la base de positions correspondantes le long de la dimension (42) de temps rapide et la dimension (41) de temps long, parmi les multiples sous-trames (171),

dans lequel on détermine les covariances sur la base de la matrice.

**13.** Procédé suivant la revendication 11 ou 12, comprenant en outre :

- sélectionner un facteur de réduction de ladite réduction du compte des échantillons (49) de données le long de la dimension (42) de temps rapide sur la base d'une dimension d'une mémoire (23) d'un dispositif (20) de traitement.

**14.** Procédé suivant l'une quelconque des revendications précédentes, comprenant en outre :

- appliquer un filtre passe bas ou un filtre passe bande aux distributions des échantillons (49) de données,
- sélectionner une fréquence de coupure du filtre passe bas ou du filtre passe bande sur la base d'une connaissance à priori d'un mouvement d'un objet de l'un ou des plusieurs objets (83, 351, 352, 353).

**15.** Procédé suivant l'une quelconque des revendications précédentes,

dans lequel chaque trame (61-66) de mesure de la séquence (60) temporelle de trames (61-66) de mesure comprend les échantillons (49) de données en outre le long d'une dimension (43) de canal, un canal de la dimension (43) de canal étant incrémenté pour différentes antennes (78-1, 78-2, 78-3) de réception utilisées pour la mesure radar,
dans lequel on détermine les covariances pour de multiples canaux le long de la dimension (43) de canal et en utilisant les distributions respectives des échantillons (49) de données le long de la dimension (41) de temps lent, dans lequel la carte (300) de portée est une carte (300) d'angle de portée.

# FIG. 1

65

```
┌─────────────────────┐ 70
│    Radar sensor     │
└─────────────────────┘
         │
         │    ▱ 64
         │
┌────────┼──────────────────────────┐ 60
│   ┌────┴────┐ 61                   │
│   │   IF    │                      │
│   └────┬────┘                      │
│        │                           │
│   ┌────┴────┐ 62    ┌─────────┐ 63 │
│   │   CPU   ├───────┤   MEM   │    │
│   └─────────┘       └─────────┘    │
│                                    │
└────────────────────────────────────┘
```

# FIG. 2

# FIG. 3

Obtain time series of
multiple measurement frames — 3005

Filter measurement frames — 3010

Aggregate measurement frames,
to obtain aggregated frames — 3015

Filter aggregated frames — 3016

Re-sample along fast time — 3020

Determine covariance — 3025

Determine spectrum — 3030

Combine spectra — 3035

Object detection — 3040

# FIG. 4

# FIG. 5

## FIG. 6

$$T_{F,virt} = T_{F,phy}N_F = 3.2s \text{ (for example, } N_F = 32)$$

EP 4 099 047 B1

# FIG. 7

# FIG. 8

# FIG. 9

# FIG. 10

# FIG. 11

Azimuth

Range

351

352  352

P(r,θ)

300

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 10996311 B2

- US 2020116850 A1

**Non-patent literature cited in the description**

- **MERCURI, MARCO et al.** Enabling robust radar-based localization and vital signs monitoring in multipath propagation environments. *IEEE Transactions on Biomedical Engineering,* 2021, vol. 68 (11), 3228-3240